# FASCICULE DE BREVET EUROPEEN

(11) **EP 3 994 997 B1**
(45) Date de publication et mention de la délivrance du brevet: **26.04.2023**
(21) Numéro de dépôt: 21203341.9
(22) Date de dépôt: 19.10.2021
(51) Int. Cl.: A21D 10/02, A21D 13/41

(54) **PÂTE À PIZZA POUR UTILISATION DIFFÉRÉE ET SON PROCÉDÉ DE PRÉPARATION**
PIZZATEIG ZUR SPÄTEREN VERWENDUNG UND SEIN HERSTELLUNGSVERFAHREN
PIZZA DOUGH FOR DEFERRED USE AND METHOD FOR PREPARING SAME

(30) Priorité: 09.11.2020 FR 2011470
(43) Date de publication de la demande: 11.05.2022
(73) Titulaire: Cérélia, 62800 Lievin (FR)
(72) Inventeur: MICHEAUX, Claire, 59890 QUESNOY-SUR-DEULE (FR); HEINRICH, Mathieu, 67500 HAGUENAU (FR); FRITSCH, Gérard, 67450 MUNDOLSHEIM (FR)
(74) Mandataire: Ipsilon

(56) Documents cités:
- EP-A2- 2 233 007
- AU-A1- 2013 231 190
- FR-A1- 3 062 032
- US-A1- 2005 266 119
- US-A1- 2009 130 252

## Description

L'invention concerne une pâte à pizza pour utilisation différée et son procédé de préparation.

La pizza est un produit d'alimentation qui est l'objet d'une forte demande des consommateurs, pour son côté pratique, pour son goût et pour sa texture crousti-moelleuse comportant un alvéolage hétérogène et une sole craquante.

Il existe des pâtons préparés industriellement et surgelés, à mettre en forme, à garnir et à cuire au moment de la consommation. Il existe aussi des pâtons préparés industriellement, conservés à température de réfrigération, de quelques jours à quelques semaines, avec une variation significative de leurs qualités au cours de leur durée de vie en général voisine d'un mois.

Le document FR 3 062 032 décrit une pâte à pizza pour utilisation différée, conservable à température de réfrigération pendant plusieurs semaines. Cette pâte à pizza comporte des constituants de base (farine, eau, huile végétale, sel, sucre, levure désactivée) et des constituants particuliers (levure boulangère, alcool, gluten, acide ascorbique, émulsifiant). La levure boulangère évolue pendant la conservation à température de réfrigération et limite la durée de vie de la pâte aux environs d'un mois. L'alcool et le gluten sont des obstacles à la diffusion de la pâte à tous les consommateurs.

L'un des buts de l'invention est de proposer une pâte à pizza pour utilisation différée, qui laisse à la charge et au goût de l'utilisateur les seules opérations consistant à étaler, garnir et cuire la pizza avant de la servir.

Un autre but de l'invention est de fournir aux professionnels de la restauration et aux consommateurs une pâte à pizza sous forme de pâtons frais ayant une durée de vie de 100 jours environ.

Un autre but de l'invention est de proposer une pâte à pizza pour utilisation différée ayant des qualités organoleptiques constantes tout au long de sa durée de vie.

L'invention a pour objet une pâte à pizza pour utilisation différée, comportant en pourcentage en poids du produit fini :
- Farine : 50 - 65
- Eau : 20 - 35
- Matières grasses : 0 - 8
- Sel : 0,7 - 2
- Sucre : 0 - 2
- Levure désactivée : 0,05 - 0,15
caractérisée en ce qu'elle comporte, en pourcentage en poids du produit fini :
- Farine fermentée : 0,1 - 2
- Vinaigre : 0,1 - 2
- Poudres à lever : 0,5 - 2
- Gommes : 0,1 - 3

Selon un mode de réalisation, les poudres à lever sont un mélange de bicarbonate de potassium (30 à 55%) et de glucono-delta-lactone (45 à 70%).

Selon un mode de réalisation, les gommes sont un mélange de xanthane (50 à 70%) et de farine de guar (30 à 50%).

Selon un mode de réalisation, au moins l'une des gommes est remplacée par de la fibre de chicorée.

Selon un mode de réalisation, les matières grasses sont constituées par de la graisse de tournesol, de l'huile de colza et de l'huile d'olive.

Selon un mode de réalisation, la graisse de tournesol et l'huile de colza constituent chacune 50% en poids des matières grasses.

Selon un mode de réalisation, la graisse de tournesol, l'huile de colza et l'huile d'olive constituent chacune un tiers du poids des matières grasses.

Selon un mode de réalisation, la pâte à pizza est conservable jusqu'à 100 jours à température de réfrigération, sous vide ou sous atmosphère d'azote ou d'un mélange d'azote et de gaz carbonique, avec un taux d'oxygène inférieur à 0,5%.

Selon un mode de réalisation, la pâte à pizza est conservable jusqu'à 100 jours à température de réfrigération, sous vide après durcissement dans une enceinte à température comprise entre -20°C et -35°C.

Selon un mode de réalisation, la farine a un taux de cendres inférieur ou égal à T40.

L'invention a également pour objet un procédé de préparation de pâte à pizza à utilisation différée caractérisé par les étapes de :
- a) mélange des composants secs puis ajout des composants liquides,
- b) pétrissage entre 3 et 9 minutes,
- c) division en pâtons du poids souhaité,
- d) boulage des pâtons,
- e) abaisse selon le format final souhaité : boule ou galet,
- f) conditionnement en emballage barrière à l'oxygène, sous atmosphère modifiée,
- g) conservation à température de réfrigération.

Selon un mode particulier de réalisation, l'étape f) est remplacée par les étapes :
- h) durcissement du pâton par descente à température de congélation,
- i) conditionnement sous vide en emballage barrière à l'oxygène.

Selon un mode particulier de réalisation, entre les étapes d) et e), est prévue une étape :
- j) temps de repos de 5 à 30 minutes.

La pâte à pizza selon l'invention est préparée à l'échelle industrielle pour mettre à disposition de l'utilisateur, qu'il soit professionnel de la restauration ou consommateur, un produit de qualité très régulière, facile à mettre en oeuvre en quelques minutes, et présentant les qualités organoleptiques d'un produit frais et artisanal. Par produit frais on entend un produit préparé de façon extemporanée, ou un produit n'ayant pas été surgelé et conservé à l'état surgelé jusqu'à son utilisation. Par qualité artisanale on entend une mie d'alvéolage hétérogène et une texture moelleuse associée à une croûte dorée brune et de texture croustillante.

La pâte à pizza est conservable à température de réfrigération jusqu'à 100 jours avec une qualité artisanale et une grande facilité d'étalement et d'étirement. L'utilisateur a ainsi à sa disposition une pâte à pizza, prête à être étalée, avant d'être garnie et cuite. L'utilisateur est aussi bien un restaurateur qu'un particulier, et il peut en quelques minutes avoir une pizza prête à être consommée.

En effet, la pâte à pizza est présentée sous forme de boule ou de galet, emballée sous vide ou sous atmosphère modifiée, composée d'azote et éventuellement de gaz carbonique, et comportant un taux d'oxygène inférieur à 0,5%.

La pâte à pizza est conservée à température de réfrigération, soit en-dessous de 8°C.

L'utilisateur prend une pâte à pizza, l'étale au diamètre et à la forme désirés, la garnit et la met au four pendant quelques minutes avant de la servir.

Ces opérations sont simples, rapides, et pratiquement sans risque.

La simplicité, la rapidité et la sécurité dans l'exécution des opérations réservées à l'utilisation sont les conséquences du procédé de préparation industrielle de la pâte à pizza. Cette pâte comporte, en pourcentage en poids du produit fini, les constituants suivants :
- Farine : 50 - 65
- Eau : 20 - 35
- Matières grasses : 0 - 8
- Sel : 0,7 - 2
- Sucre : 0 - 2
- Levure désactivée : 0,05 - 0,15
- Farine fermentée : 0,1 - 2
- Vinaigre : 0,1 - 2
- Poudres à lever : 0,5 - 2
- Gommes : 0,1 - 3

Dans cette pâte à pizza, la farine est de préférence une farine à taux de cendres inférieur ou égal à T40.

Les matières grasses sont constituées par de la graisse de tournesol, de l'huile de colza et de l'huile d'olive. Dans un exemple de réalisation, la graisse de tournesol et l'huile de colza constituent chacune 50% en poids des matières grasses. Dans un autre exemple de réalisation, la graisse de tournesol, l'huile de colza et l'huile d'olive constituent chacune un tiers en poids des matières grasses. Dans un autre exemple de réalisation, le taux de matières grasses est de zéro.

La farine fermentée est séchée et ne contient pas de microorganismes vivants, ce qui permet la durée de vie de 100 jours de la pâte à pizza.

Le vinaigre est un produit naturel dont le risque d'incompatibilité sanitaire est très faible.

Les poudres à lever comprennent avantageusement du bicarbonate de potassium, plutôt que du bicarbonate de sodium, et du glucono-delta-lactone comme acidifiant lent. De préférence, leurs proportions relatives sont bicarbonate de potassium (30 à 55%) et glucono-delta-lactone (45 à 70%). Avec le ou à la place du, glucono-delta-lactone, d'autres acidifiants peuvent être utilisés, par exemple en mélange, et notamment des acides organiques.

Les gommes sont avantageusement constituées par un mélange de xanthane et de farine de guar dans des proportions comprises entre 50 et 70% pour le xanthane et 30 à 50% pour la farine de guar. Selon un exemple particulier de réalisation de la fibre de chicorée peut remplacer chacune des gommes, ou les deux.

Le procédé de préparation de la pâte à pizza selon l'invention comprend les étapes suivantes :
- 1) le mélange des constituants secs,
- 2) l'ajout des constituants liquides,
- 3) le pétrissage de l'ensemble des constituants pendant 3 à 9 minutes,
- 4) la division en pâtons du poids souhaité,
- 5) le boulage des pâtons,
- 6) l'abaisse selon le format final souhaité, boule ou galet,
- 7) le conditionnement en emballage barrière à l'oxygène, sous atmosphère modifiée à base d'azote et éventuellement de gaz carbonique,
- 8) la conservation à température de réfrigération jusqu'à 100 jours.

Avantageusement, entre le boulage des pâtons et l'abaisse, un temps de repos de 5 à 30 minutes peut être prévu.

Selon une variante de réalisation, l'étape 7 est remplacée par une étape de descente en température dans une enceinte à température comprise entre -20°C et -35°C jusqu'à ce que le coeur de la pâte à pizza soit à -4°C. La pâte à pizza est alors conditionnée sous vide. Ensuite la pâte à pizza est conservée à température de réfrigération, inférieure à 8°C, jusqu'à au moins 100 jours.

La combinaison de la farine à faible taux de cendres, des matières grasses, de la farine fermentée, du vinaigre, des poudres à lever et des gommes, associée à un conditionnement approprié pour assurer un taux d'oxygène inférieur à 0,5% tout au long de la durée de vie de la pâte à pizza, permet d'atteindre cette durée de vie d'environ 100 jours en termes de qualité organoleptique et de qualité microbiologique.

## Revendications

1. Pâte à pizza pour utilisation différée, comportant, en pourcentage en poids du produit fini
- farine : 50 - 65
- eau : 20 - 35
- matières grasses : 0 - 8
- sel : 0,7 - 2
- sucre : 0 - 2
- levure désactivée : 0,05 - 0,15
**caractérisée en ce qu'**elle comporte, en pourcentage en poids du produit fini :
- farine fermentée : 0,1 - 2
- vinaigre : 0,1 - 2
- poudres à lever : 0,5 - 2
- gommes : 0,1- 3

2. Pâte à pizza selon la revendication 1 **caractérisée en ce que** les poudres à lever sont un mélange de bicarbonate de potassium (30 à 55%) et de glucono-delta-lactone (45 à 70%).

3. Pâte à pizza selon la revendication 1 **caractérisée en ce que** les gommes sont un mélange de xanthane (50 à 70%) et de farine de guar (30 à 50%).

4. Pâte à pizza selon la revendication 1 **caractérisée en ce que** les gommes comprennent de la fibre de chicorée.

5. Pâte à pizza selon la revendication 1 **caractérisée en ce que** les matières grasses sont constituées par de la graisse de tournesol, de l'huile de colza et de l'huile d'olive.

6. Pâte à pizza selon la revendication 1 **caractérisée en ce que** les graisses sont constituées par de la graisse de tournesol et l'huile de colza chacune dans la proportion de 50% en poids des matières grasses.

7. Pâte à pizza selon la revendication 5 **caractérisée en ce que** la graisse de tournesol, l'huile de colza et l'huile d'olive constituent chacune un tiers du poids des matières grasses.

8. Pâte à pizza selon l'une des revendications 1 à 7 **caractérisée en ce que** la farine a un taux de cendres inférieur ou égal à T40.

9. Procédé de préparation de pâte à pizza pour utilisation différée selon l'une des revendications 1 à 7 **caractérisé par** les étapes de :
- a) mélange des composants secs puis ajout des composants liquides,
- b) pétrissage entre 3 et 9 minutes,
- c) division en pâtons du poids souhaité,
- d) boulage des pâtons,
- e) abaisse selon le format final souhaité : boule ou galet,
- f) conditionnement en emballage barrière à l'oxygène, sous atmosphère modifiée
- g) conservation à température de réfrigération.

10. Procédé selon la revendication 9 **caractérisé en ce que**, entre les étapes d) et e), est prévue une étape :
- j) temps de repos de 5 à 30 minutes.

11. Procédé de préparation de pâte à pizza pour utilisation différée selon l'une des revendications 1 à 7, **caractérisé par** les étapes de:
- a) mélange des composants secs puis ajout des composants liquides,
b) pétrissage entre 3 et 9 minutes,
c) division en pâtons du poids souhaité,
d) boulage des pâtes,
e) abaisse selon le format final souhaité: boule ou galet,
h) durcissement du pâton par descente à température de congélation
i) conditionnement sous vide en emballage barrière à l'oxygène
g) conservation à température de réfrigération.

## Patentansprüche

1. Pizzateig zur späteren Verwendung, der in Gewichtsprozent des Endprodukts aufweist
- Mehl: 50 - 65
- Wasser: 20 - 35
- Fett: 0 - 8
- Salz: 0,7 - 2
- Zucker: 0 - 2
- deaktivierte Hefe: 0,05 - 0,15
**dadurch gekennzeichnet, dass** er in Gewichtsprozent des Endprodukts aufweist:
- fermentiertes Mehl: 0,1 - 2
- Essig: 0,1 - 2
- Backtriebmittel: 0,5 - 2
- Gummis: 0,1- 3

2. Pizzateig nach Anspruch 1, **dadurch gekennzeichnet, dass** die Backtriebmittel ein Gemisch aus Kaliumbicarbonat (30 bis 55 %) und aus Glucon-Delta-Lacton (45 bis 70 %) sind.

3. Pizzateig nach Anspruch 1, **dadurch gekennzeichnet, dass** die Gummis ein Gemisch aus Xanthan (50 bis 70 %) und Guarkernmehl (30 bis 50 %) sind.

4. Pizzateig nach Anspruch 1, **dadurch gekennzeichnet, dass** die Gummis Zichorienfaser umfassen.

5. Pizzateig nach Anspruch 1, **dadurch gekennzeichnet, dass** das Fett aus Sonnenblumenfett, Rapsöl und Olivenöl besteht.

6. Pizzateig nach Anspruch 1, **dadurch gekennzeichnet, dass** das Fett aus Sonnenblumenfett und Rapsöl besteht, jeweils im Anteil von 50 Gew.-% des Fetts.

7. Pizzateig nach Anspruch 5, **dadurch gekennzeichnet, dass** das Sonnenblumenfett, das Rapsöl und das Olivenöl jeweils ein Drittel des Gewichts des Fetts darstellen.

8. Pizzateig nach einem der Ansprüche 1 bis 7, **dadurch gekennzeichnet, dass** das Mehl einen Aschegehalt von unter oder gleich T40 hat.

9. Verfahren zur Herstellung von Pizzateig zur späteren Verwendung nach einem der Ansprüche 1 bis 7, das durch die folgenden Schritte gekennzeichnet ist:
- a) Mischen der trockenen Bestandteile, dann Hinzufügen der flüssigen Bestandteile,
- b) Kneten zwischen 3 und 9 Minuten,
- c) Unterteilen in Teiglinge des gewünschten Gewichts,
- d) Rundwirken der Teiglinge,
- e) Abflachen gemäß dem gewünschten Endformat: Kugel oder Scheibe,
- f) Verpacken in einer gegenüber Sauerstoff dichten Verpackung unter modifizierter Atmosphäre,
- g) Aufbewahren bei Kühltemperatur.

10. Verfahren nach Anspruch 9, **dadurch gekennzeichnet, dass** zwischen den Schritten d) und e) ein Schritt vorgesehen ist:
- j) Ruhezeit von 5 bis 30 Minuten.

11. Verfahren zur Herstellung von Pizzateig zur späteren Verwendung nach einem der Ansprüche 1 bis 7, das durch die folgenden Schritte gekennzeichnet ist:
- a) Mischen der trockenen Bestandteile, dann Hinzufügen der flüssigen Bestandteile,
- b) Kneten zwischen 3 und 9 Minuten,
- c) Unterteilen in Teiglinge des gewünschten Gewichts,
- d) Rundwirken der Teiglinge,
- e) Abflachen gemäß dem gewünschten Endformat: Kugel oder Scheibe,
- h) Härten des Teiglings durch Senken auf Gefriertemperatur,
- i) Verpacken in einer gegenüber Sauerstoff dichten Verpackung unter modifizierter Atmosphäre,
- g) Aufbewahren bei Kühltemperatur.

## Claims

1. A pizza dough for deferred used comprising, by weight percentage of the end product:
- flour: 50 - 65;
- water: 20 - 35;
- fats: 0 - 8;
- salt: 0.7 - 2;
- sugar: 0 - 2;
- deactivated yeast: 0.05 - 0.15;
**characterized in that**, by weight percentage of the end product, it comprises:
- fermented flour: 0.1 - 2;
- vinegar: 0.1 - 2;
- raising agents: 0.5 - 2;
- gums: 0.1 - 3.

2. The pizza dough according to claim 1, **characterized in that** the raising agents are a mixture of potassium bicarbonate (30 to 55 %) and glucono-delta-lactone (45 to 70 %).

3. The pizza dough according to claim 1, **characterized in that** the gums are a mixture of xanthan (50 to 70 %) and guar gum flour (30 to 50 %).

4. The pizza dough according to claim 1, **characterized in that** the gums comprise chicory root fibre.

5. The pizza dough according to claim 1, **characterized in that** the fats are composed of sunflower fat, rapeseed oil and olive oil.

6. The pizza dough according to claim 1, **characterized in that** the fats are composed of sunflower fat and rapeseed oil, each in the proportion of 50 % by weight of fats.

7. The pizza dough according to claim 5, **characterized in that** the sunflower fat, rapeseed oil and olive oil each form one third by weight of the fats.

8. The pizza dough according to one of claims 1 to 7, **characterized in that** the flour has an ash content less than or equal to T40.

9. A method for preparing pizza dough for deferred use according to one of claims 1 to 7, **characterized by** the steps of:
a) mixing the dry components then adding the liquid components,
b) kneading for between 3 and 9 minutes;
c) dividing into dough portions of desired weight;
d) rounding the dough portions;
e) rolling out to the desired end shape: ball or disc shape;
f) packaging in oxygen-barrier pack under modified atmosphere;
g) storing at refrigeration temperature.

10. The method according to claim 9, **characterized in that** between steps d) and e) there is provided a step of:
j) leaving to rest 5 to 30 minutes.

11. The method for preparing a pizza dough for deferred use according to one of claims 1 to 7, **characterized by** the steps of:
a) mixing the dry components then adding the liquid components;
b) kneading for between 3 and 9 minutes;
c) dividing into dough portions of desired weight;
d) rounding the dough portions;
e) rolling out to the desired end shape: ball or disc shape;
h) hardening the dough portions by lowering to freezing temperature;
i) vacuum packaging in oxygen-barrier pack;
g) storing at refrigeration temperature.
